# EUROPEAN PATENT SPECIFICATION

(11) **EP 4 184 684 B1**
(45) Date of publication and mention of the grant of the patent: **11.12.2024**
(21) Application number: 22205809.1
(22) Date of filing: 07.11.2022
(51) Int. Cl.: H01M 50/209, H01M 50/224, H01M 50/242, H01M 50/249, H01M 50/264

(54) **BATTERY MODULE**
BATTERIEMODUL
MODULE DE BATTERIE

(30) Priority: 17.11.2021 JP 2021187138
(43) Date of publication of application: 24.05.2023
(73) Proprietor: Prime Planet Energy & Solutions, Inc., Chuo-ku Tokyo 103-0022 (JP)
(72) Inventor: ABE, Kosyo, Tokyo, 103-0022 (JP); TAKEDA, Takahide, Tokyo, 103-0022 (JP); KOBAYASHI, Keiichiro, Tokyo, 103-0022 (JP); TSUCHIDA, Yasushi, Tokyo, 103-0022 (JP); OCHI, Makoto, Tokyo, 103-0022 (JP); TAKENO, Mio, Tokyo, 103-0022 (JP); KOIKE, Masaki, Tokyo, 103-0022 (JP); WATANABE, Koji, Tokyo, 103-0022 (JP); SUZUKI, Yuzo, Tokyo, 103-0022 (JP); SAKURAMOTO, Seiichi, Tokyo, 103-0022 (JP); IKEDA, Yasuo, Tokyo, 103-0022 (JP); IWASE, Kosuke, Tokyo, 103-0022 (JP)
(74) Representative: Kuhnen & Wacker Patent- und Rechtsanwaltsbüro PartG mbB

(56) References cited:
- DE-B3- 102020 108 136
- JP-A- 2011 228 306
- US-A1- 2014 356 659
- US-A1- 2021 135 317

## Description

This nonprovisional application is based on Japanese Patent Application No. 2021-187138 filed on November 17, 2021 with the Japan Patent Office.

### BACKGROUND OF THE INVENTION

### Field of the Invention

The present technology relates to a battery module.

### Description of the Background Art

A battery module in which a plurality of battery cells are stacked has been conventionally known. The plurality of battery cells are restrained in the stacking direction by restraint members. As a mechanism for adjusting a restraint force in the stacking direction, there have been known mechanisms described in JP 2013-020891 A and JP 2021-057149 A.

Further, patent document JP 2011-228306 A discloses a battery module including: a plurality of unit battery cells; a pair of end plates which are arranged at both ends of the plurality of the laminated unit battery cells, and spatially separated from each other and fastened together in order to house the plurality of the unit battery cells; and a pressure adjustment part which is arranged between the unit battery cells and at least one of the end plates and adjusts pressure applied to the plurality of the unit battery cells.

Patent document US 2014/356659 A1 discloses a battery clamping device including: an interposition member configured to be interposed between rectangular parallelepiped batteries such that the interposition member is stacked with a plurality of the batteries alternately; a clamping portion configured to clamp by pressing the stacked batteries and the interposition member in a stacking direction of the batteries and the interposition member from outside in the stacking direction.

Moreover, patent document US 2021/135317 A1 discloses a power storage device which is provided with a cell stack body formed by alternately arranging a plurality of secondary cells and a plurality of buffer plates. Each of the buffer plates has a non-deformable section and a deformable section that is elastically deformed according to a volume change in the secondary cell. The non-deformable section has a through hole in which the deformable section is fitted. The deformable section is formed thicker than the non-deformable section.

In addition, patent document DE 10 2020 108 136 B3 discloses an electrical energy storage device including a cell stack with a plurality of layers of battery cells disposed one above the other and disposed between a first pressure plate and a second pressure plate. A distance between the first pressure plate and the second pressure plate is changeable by actuation of an actuator unit. The actuator unit has a flexible envelope element which encloses the first pressure plate, the second pressure plate, and the cell stack and has a rolling element. The flexible envelope element is rollable up and unrollable by the rolling element such that the distance between the first pressure plate and the second pressure plate is changeable by a change in a length of the flexible envelope element in a peripheral direction of the flexible envelope element.

### SUMMARY OF THE INVENTION

Each of the adjustment mechanisms described in JP 2013-020891 A and JP 2021-057149 A is intended to suppress a restraint force for the battery cells from being increased to fall within an unintended range when an ambient temperature or a temperature of the battery module is increased. In order to adjust the restraint force in response to a customer's request or the like after restraining the battery cells by the restraint members, a different mechanism is required. An object of the present technology is to provide a battery module in which a restraint load for battery cells by a restraint mechanism can be readily adjusted.

The above-mentioned object is solved by the subject-matter of claim 1. Further advantageous configurations of the invention can be drawn from the dependent claims.

A battery module according to an explanatory aspect of the present technology includes: a plurality of battery cells arranged side by side in a first direction, each of the plurality of battery cells having a prismatic shape; a restraint mechanism that restrains the plurality of battery cells in the first direction; and a restraint force adjustment mechanism capable of adjusting a restraint load in the first direction, the restraint load being applied by the restraint mechanism. The restraint force adjustment mechanism includes an operation portion to be operated when adjusting the restraint load. The operation portion is provided on the battery module.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery module according to one embodiment of the present technology.
Fig. 2 is a perspective view of the battery module of Fig. 1 when viewed in a direction of an arrow II.
Fig. 3 is a perspective view showing configurations of a unit and end plates included in the battery module according to the embodiment of the present technology.
Fig. 4 is a perspective view showing a configuration of the unit included in the battery module according to the embodiment of the present technology.
Fig. 5 is a cross sectional view of the unit of Fig. 4 when viewed in a direction of an arrow V.
Fig. 6 is a perspective view showing a configuration of a battery cell included in the battery module according to the embodiment of the present technology.
Fig. 7 is a partial perspective view showing a configuration of each voltage detection wire included in the battery module according to the embodiment of the present technology.
Fig. 8 is a diagram showing a structure of a restraint force adjustment mechanism according to an example.
Fig. 9 is a diagram showing a state when the adjustment mechanism shown in Fig. 8 is viewed in a Y direction.
Fig. 10 is a diagram showing a structure of a restraint force adjustment mechanism according to a modification.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly.

It should be noted that in the present specification, the terms "comprise", "include", and "have" are open-end terms. That is, when a certain configuration is included, a configuration other than the foregoing configuration may or may not be included. Further, the present technology is not limited to one that necessarily exhibits all the functions and effects stated in the present embodiment.

In the present specification, the term "battery" is not limited to a lithium ion battery, and may include another battery such as a nickel-metal hydride battery. In the present specification, the term "electrode" may collectively represent a positive electrode and a negative electrode. Further, the term "electrode plate" may collectively represent a positive electrode plate and a negative electrode plate.

It should be noted that in the figures, a stacking direction of the battery cells is defined as a first direction serving as a Y direction, a direction in which two electrode terminals of each battery cell are arranged side by side is defined as a second direction serving as an X direction, and a height direction of the battery cell is defined as a third direction serving as a Z direction.

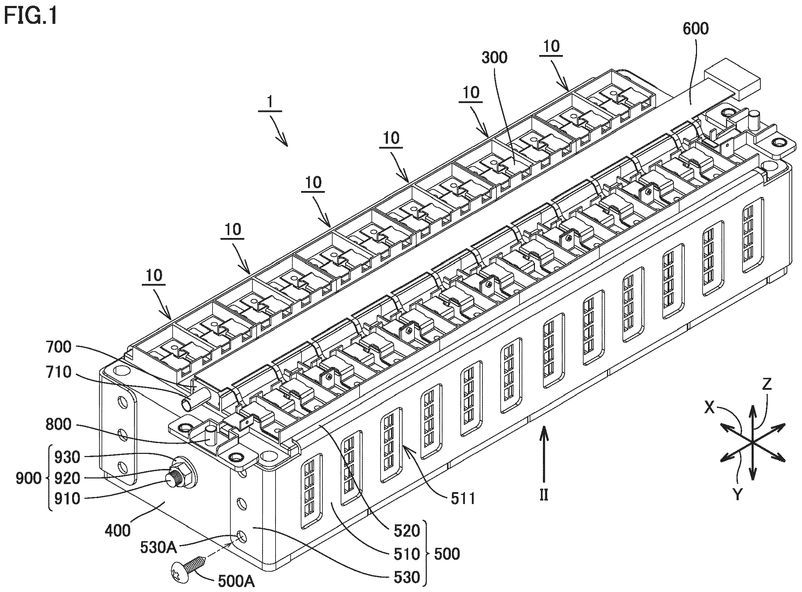

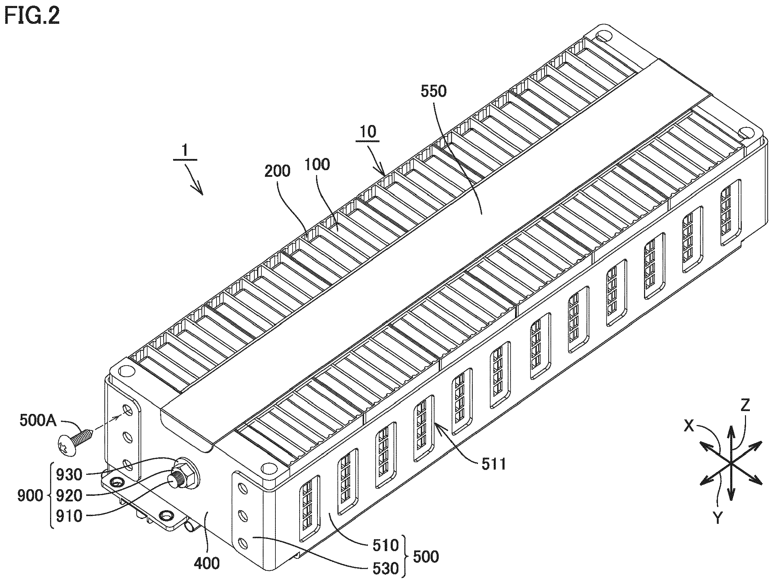

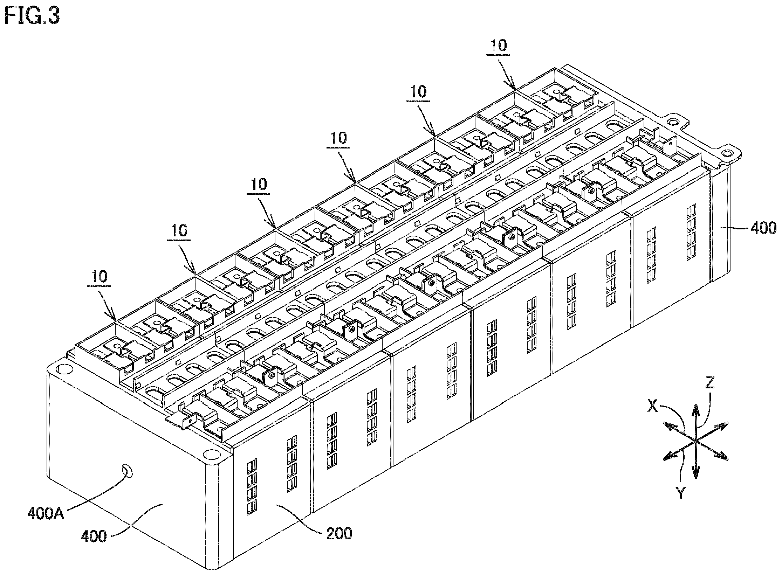

Fig. 1 is a perspective view showing a configuration of a battery module according to one embodiment of the present technology. Fig. 2 is a perspective view of the battery module of Fig. 1 when viewed in a direction of an arrow II. Fig. 3 is a perspective view showing configurations of a unit and end plates included in the battery module according to the embodiment of the present technology.

A battery module 1 is used as a power supply for driving a vehicle such as a hybrid electric vehicle (HEV), a plug-in hybrid electric vehicle (PHEV), or a battery electric vehicle (BEV), for example.

First, an overall structure of battery module 1 will be described. As shown in Figs. 1 to 3, battery module 1 includes a plurality of units 10, end plates 400, restraint members 500, a lower restraint member 550, a wiring member 600, a duct 700, and connection terminals 800.

The plurality of units 10 are arranged side by side in the first direction (Y direction). Six units 10 are arranged side by side in the Y direction as the plurality of units 10 according to the present embodiment. It should be noted that the number of the plurality of units 10 is not particularly limited as long as two or more units 10 are included.

The plurality of units 10 are sandwiched between two end plates 400. The plurality of units 10 according to the present embodiment are pressed by end plates 400 and restrained between two end plates 400.

End plates 400 are provided at the both ends beside the plurality of units 10 in the Y direction. Each of end plates 400 is fixed to a base such as a pack case that accommodates battery module 1. End plate 400 is composed of, for example, aluminum or iron.

Restraint members 500 are provided on both sides beside the plurality of units 10 and end plates 400 in the X direction. When restraint members 500 are engaged with end plates 400 with compressive force in the Y direction being applied to the plurality of units 10 arranged side by side and to end plates 400 and then the compressive force is released, tensile force acts on restraint members 500 that connect two end plates 400. As a reaction thereto, restraint members 500 press two end plates 400 in directions of bringing them closer to each other. As a result, restraint members 500 restrain the plurality of units 10 in the first direction (the Y direction).

Each of restraint members 500 includes a plate-shaped portion 510, a first flange portion 520, and second flange portions 530. Restraint member 500 is composed of iron, for example.

Plate-shaped portion 510 is a member extending in the Y direction. Plate-shaped portion 510 is provided with a plurality of openings 511. The plurality of openings 511 are provided at intervals in the Y direction, and each of openings 511 is constituted of a through hole extending through plate-shaped portion 510 in the X direction.

First flange portion 520 extends from beside the side surfaces of the plurality of units 10 so as to be located over the upper surfaces of the plurality of units 10. By providing first flange portion 520, rigidity of restraint member 500 formed to be relatively thin can be secured.

Second flange portions 530 are connected to both ends of plate-shaped portion 510 in the Y direction. Second flange portions 530 are fixed to end plates 400. Bolt holes 530A are formed in second flange portions 530. Restraint members 500 are fixed to end plates 400 by bolts 500A inserted in bolt holes 530A, for example. Thus, restraint members 500 connect two end plates 400 to each other.

As shown in Fig. 2, lower restraint member 550 is provided on the bottom surfaces of the plurality of units 10 and end plates 400. Lower restraint member 550 protects below-described battery cells 100 from the bottom surface side. Lower restraint member 550 is composed of iron, for example.

As shown in Fig. 1, wiring member 600 is provided at a position facing the plurality of units 10 in the Z direction. Wiring member 600 extends in the Y direction through the center portion of each of the plurality of units 10 in the X direction. Wiring member 600 is electrically connected to the plurality of units 10. Wiring member 600 is, for example, a flexible printed circuit board.

Duct 700 extends in the Y direction. Duct 700 extends at a position overlapping with wiring member 600 when viewed in the Z direction. Duct 700 is disposed between each of the plurality of units 10 and wiring member 600 in the Z direction.

Connection terminals 800 are arranged on both sides beside the plurality of units 10 arranged side by side in the Y direction. Each of connection terminals 800 is provided at a position overlapping with end plate 400 when viewed in the Z direction. Connection terminal 800 connects battery module 1 to an external wiring such as a cable (not shown) disposed outside battery module 1.

A restraint force adjustment mechanism 900 is provided on an end surface of end plate 400. Restraint force adjustment mechanism 900 includes: a bolt member 910 attached to end plate 400; a nut member 920 screwed on bolt member 910; and a shim member 930.

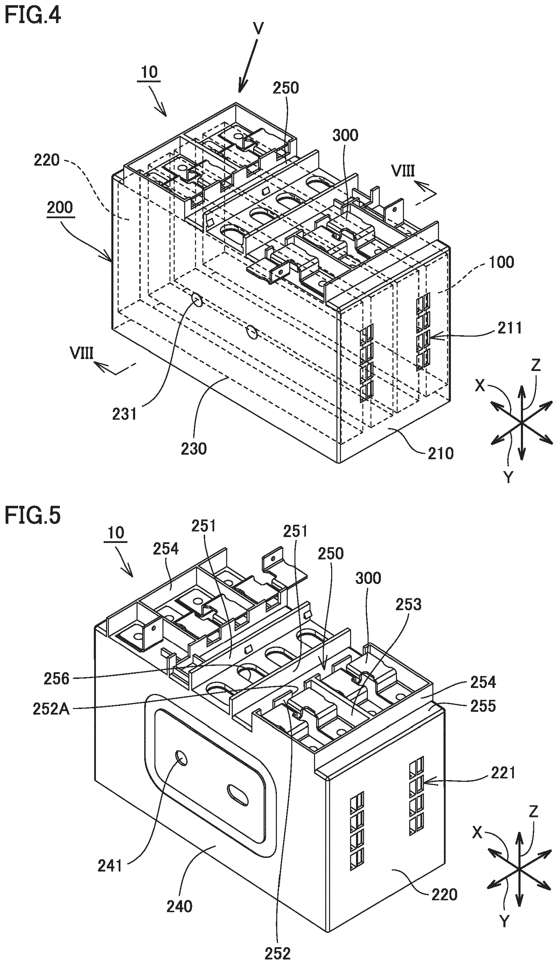

Next, a structure of unit 10 will be described. Fig. 4 is a perspective view showing a configuration of the unit included in the battery module according to the embodiment of the present technology. Fig. 5 is a perspective view of the unit of Fig. 4 when viewed in a direction of an arrow V.

As shown in Figs. 4 and 5, each of the plurality of units 10 includes a plurality of battery cells 100, a case 200 serving as a supporting member, and a bus bar 300.

Unit 10 includes two or more battery cells 100. Unit 10 according to one embodiment of the present technology includes four battery cells 100 as an even number of battery cells 100. It should be noted that the number of battery cells 100 included in each of the plurality of units 10 is not particularly limited as long as two or more battery cells 100 are included. Moreover, an odd number of battery cells 100 may be included in each of the plurality of units 10.

The plurality of battery cells 100 are arranged side by side in the first direction (Y direction). Four battery cells 100 are arranged side by side in the Y direction as the plurality of battery cells 100 according to the embodiment of the present technology. The arrangement direction of the plurality of units 10 is the same as the arrangement direction of the plurality of battery cells 100 in each of the plurality of units 10.

Case 200 has an external appearance with a rectangular parallelepiped shape. Case 200 accommodates the plurality of battery cells 100. Case 200 is composed of, for example, a resin such as polypropylene. As shown in Figs. 1 to 3, case 200 is compressed in the first direction (Y direction) by restraint members 500.

A bolt hole 400A for attaching bolt member 910 of restraint force adjustment mechanism 900 is formed in end plate 400.

As shown in Figs. 4 and 5, case 200 has a front wall portion 210, a rear wall portion 220, a first side wall portion 230, a second side wall portion 240, and an upper surface portion 250.

Front wall portion 210 is a surface adjacent to one of restraint members 500. As shown in Fig. 4, front wall portion 210 is provided with a plurality of first ventilation ports 211. Each of first ventilation ports 211 is a through hole extending through front wall portion 210 in the X direction.

As shown in Fig. 5, rear wall portion 220 is a surface facing front wall portion 210 with the plurality of battery cells 100 being interposed therebetween in the X direction. Rear wall portion 220 is provided with a plurality of second ventilation ports 221. Each of second ventilation ports 221 is a through hole extending through rear wall portion 220 in the X direction.

First side wall portion 230 and second side wall portion 240 are arranged side by side in the first direction (Y direction), and face each other.

As shown in Fig. 4, first side wall portion 230 has a protrusion 231. Protrusion 231 protrudes opposite to second side wall portion 240. As shown in Fig. 5, second side wall portion 240 is provided with a recess 241. Recess 241 is recessed toward first side wall portion 230 and has a shape engageable with protrusion 231. Protrusion 231 and recess 241 of adjacent units 10 of the plurality of units 10 are engaged with each other.

Upper surface portion 250 includes first wall portions 251, second wall portions 252, third wall portions 253, fourth wall portions 254, engagement surfaces 255, and hole portions 256. Two first wall portions 251 are formed parallel to each other so as to extend in the Y axis direction at the center portion in the X direction. Second wall portions 252, third wall portions 253, and fourth wall portions 254 are provided on both sides beside first wall portions 251 in the X direction so as to define installation positions for bus bars 300. Each of second wall portions 252 is provided with a notch 252A through which a below-described voltage detection wire 610 extends. Second flange portions 530 of restraint members 500 are engaged with engagement surfaces 255. Hole portions 256 communicate with below-described gas-discharge valves 130.

Each of bus bars 300 is composed of an electric conductor. The plurality of bus bars 300 electrically connect the plurality of battery cells 100 together.

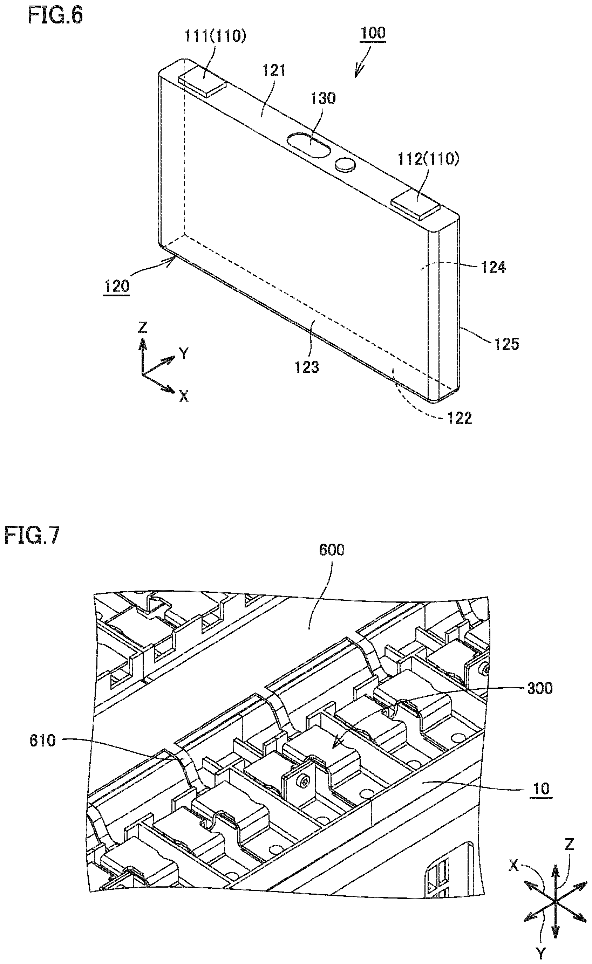

Fig. 6 is a perspective view showing a configuration of a battery cell included in the battery module according to the embodiment of the present technology.

As shown in Fig. 6, battery cell 100 is, for example, a lithium ion battery. Battery cell 100 has a prismatic shape.

Battery cell 100 according to the present embodiment has electrode terminals 110, a housing 120, and a gas-discharge valve 130.

Electrode terminals 110 are formed on housing 120. Electrode terminals 110 have a positive electrode terminal 111 and a negative electrode terminal 112 as two electrode terminals 110 arranged side by side along the second direction (the X direction) orthogonal to the first direction (the Y direction).

Positive electrode terminal 111 and negative electrode terminal 112 are provided to be separated from each other in the X direction. Positive electrode terminal 111 and negative electrode terminal 112 are provided on both sides beside wiring member 600 and duct 700 in the X direction.

Housing 120 has a rectangular parallelepiped shape, and forms the external appearance of battery cell 100. An electrode assembly (not shown) and an electrolyte solution (not shown) are accommodated in housing 120.

Housing 120 includes an upper surface 121, a lower surface 122, a first side surface 123, a second side surface 124, and a third side surface 125.

Upper surface 121 is a flat surface orthogonal to the Z direction. Electrode terminals 110 are disposed on upper surface 121. Lower surface 122 faces upper surface 121 along the third direction (Z direction) orthogonal to the first direction (Y direction).

Each of first side surface 123 and second side surface 124 is constituted of a flat surface orthogonal to the Y direction. Each of first side surface 123 and second side surface 124 has the largest area among the areas of the plurality of side surfaces of housing 120. Each of first side surface 123 and second side surface 124 has a rectangular shape when viewed in the Y direction. Each of first side surface 123 and second side surface 124 has a rectangular shape in which the X direction corresponds to the long-side direction and the Z direction corresponds to the short-side direction when viewed in the Y direction.

The plurality of battery cells 100 are stacked such that first side surfaces 123 of battery cells 100, 100 adjacent to each other in the Y direction face each other and second side surfaces 124 of battery cells 100, 100 adjacent to each other in the Y direction face each other. Thus, positive electrode terminals 111 and negative electrode terminals 112 are alternately arranged in the Y direction in which the plurality of battery cells 100 are stacked.

It should be noted that when an odd number of battery cells 100 are included in unit 10, the posture of unit 10 may be turned by 180° with respect to the Z axis between units 10 adjacent to each other in the Y direction.

Gas-discharge valve 130 is provided in upper surface 121. When internal pressure of housing 120 becomes more than or equal to a predetermined value due to gas generated inside housing 120, gas-discharge valve 130 discharges the gas to the outside of housing 120. The gas from gas-discharge valve 130 flows through duct 700 in Fig. 1 and is discharged to the outside of battery module 1.

Fig. 7 is a partial perspective view showing a configuration of each voltage detection wire included in the battery module according to the embodiment of the present technology.

As shown in Fig. 7, wiring member 600 includes voltage detection wires 610 that each detects a voltage. The plurality of voltage detection wires 610 extend to and are connected to bus bars 300. One voltage detection wire 610 is disposed in each of the plurality of units 10. Thus, voltage detection wire 610 can detect the voltage of unit 10.

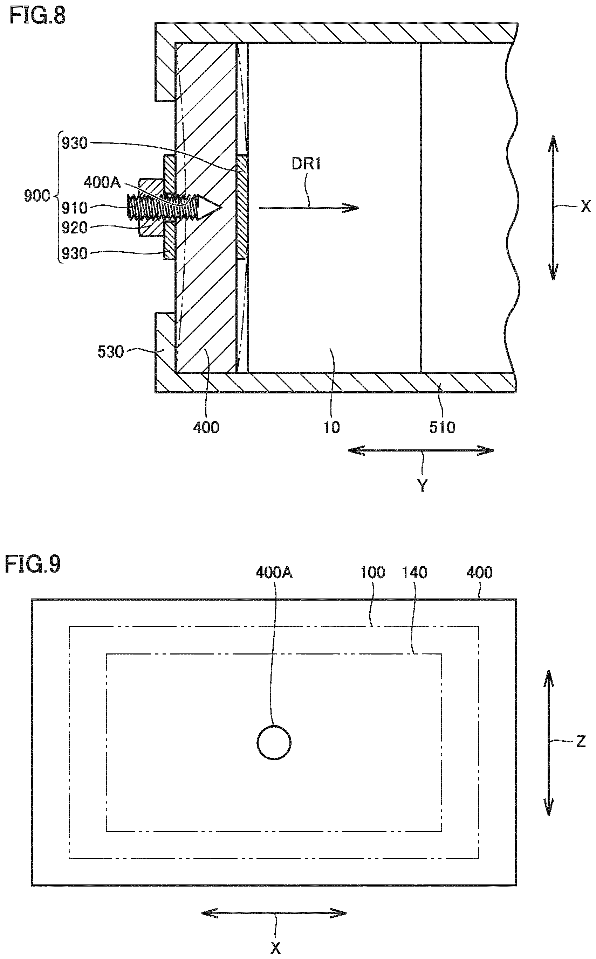

Fig. 8 is a diagram showing a structure of restraint force adjustment mechanism 900 according to an example. End plate 400 and restraint member 500 (binding bar) shown in Fig. 8 constitute a restraint mechanism that restrains the plurality of units 10 in the first direction (Y direction). Bolt member 910 is provided in end plate 400 in the same direction as the stacking direction (Y direction) of units 10. A plurality of bolt members 910 may be provided. Bolt member 910 may also serve as a vehicle-side fastening point, and bolt member 910 is coupled to a vehicle-side fixation bracket in this case.

Nut member 920 is screwed on bolt member 910. By fastening nut member 920 toward the right side in the figure, end plate 400 is deflected (chain double-dashed line in the figure) to protrude in a direction of an arrow DR1 (right side in the figure). As a result, a restraint force for units 10 is increased. Nut member 920 constitutes an operation portion to be operated when adjusting a restraint load.

An amount of deflection of end plate 400 can be adjusted by shim member 930. Shim member 930 is provided between a unit 10 located at an end portion and end plate 400. When bolt member 910 also serves as a vehicle-side fastening point (fixation member), shim member 930 is provided between end plate 400 and the vehicle-side (base-side) fixation bracket (attachment member).

In this way, in restraint force adjustment mechanism 900, nut member 920 can be fastened onto bolt member 910 to deflect end plate 400 toward the stack of units 10, and an amount of fastening of nut member 920 can be adjusted to adjust the amount of deflection of end plate 400. Thus, the restraint force by end plate 400 can be adjusted.

Fig. 9 is a diagram showing a state when the adjustment mechanism shown in Fig. 8 is viewed in the Y direction. As shown in Fig. 9, when battery cell 100 is projected onto end plate 400 along the Y direction, bolt hole 400A into which bolt member 910 is attached is provided in a region in which an electrode assembly 140 of battery cell 100 is located (more preferably, in a region of a range of application of a positive electrode active material layer included in electrode assembly 140). Thus, bolt member 910 can be provided at least in a region that requires restraint.

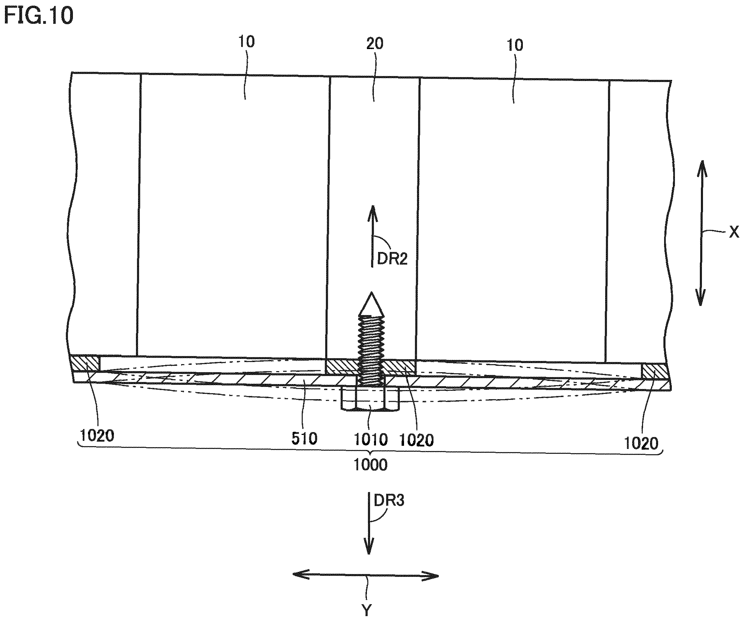

Fig. 10 is a diagram showing a structure of a restraint force adjustment mechanism 1000 according to a modification. Plate-shaped portion 510 of restraint member 500 is fastened to an intermediate plate 20 (another module component) along the X direction (or the Z direction) orthogonal to the stacking direction (Y direction) of units 10. Specifically, bolt member 1010 extends through plate-shaped portion 510, and the tip of bolt member 1010 is fixed to intermediate plate 20.

When bolt member 1010 is fastened toward intermediate plate 20, plate-shaped portion 510 of restraint member 500 is deflected to protrude in a direction of an arrow DR2 (upper side in the figure). As a result, battery module 1 is deformed to be reduced in its length in the first direction (Y direction), thereby increasing the restraint force for units 10.

When bolt member 1010 is loosened and a shim member 1020 is inserted between plate-shaped portion 510 of restraint member 500 and intermediate plate 20, plate-shaped portion 510 is deflected to protrude in a direction of an arrow DR3 (lower side in the figure). Also in this case, battery module 1 is deformed to reduce its length in the stacking direction (Y direction), thereby increasing the restraint force for units 10.

The amount of deflection of plate-shaped portion 510 of restraint member 500 can be adjusted by the amount of fastening of bolt member 1010 and the thickness of shim member 1020. That is, by adjusting the fastening force of bolt member 1010, the amount of deflection of restraint member 500 along the X direction or the Z direction can be adjusted, thereby adjusting the length of battery module 1 along the Y direction. Here, bolt member 1010 constitutes an operation portion to be operated when adjusting a restraint load.

In battery module 1 according to the embodiment of the present technology, since the operation portion to be operated when adjusting the restraint load is provided on battery module 1, the restraint load can be readily adjusted after the battery cells are restrained by the restraint members. Therefore, the restraint load can be readily adjusted in response to a customer's request or the like at the time of shipment of a product or the like after forming battery module 1.

Further, in battery module 1, since the plurality of battery cells 100 are accommodated in case 200 such that they are arranged side by side in the first direction (Y direction), unit 10 is formed, and the plurality of such units 10 are arranged side by side in the first direction (Y direction) to form battery module 1, the manufacturing process can be simplified as compared with a case where battery module 1 is manufactured with each of the plurality of battery cells 100 being handled as one unit. An example of the simplification is, for example, as follows: units 10 each formed to be small is caused to pass through a welding machine to weld bus bars 300 in units 10, and then bus bars 300 over different units 10 are individually joined together, thereby attaining increased efficiency in the welding process.

Further, in battery module 1, since units 10 each including the plurality of battery cells 100 accommodated in case 200 are formed, battery module 1 can be readily disassembled or replaced with each unit 10 being handled as one unit.

Further, in battery module 1, since units 10 each including the plurality of battery cells 100 accommodated in case 200 are formed, battery module 1 can be divided with each unit 10 being handled as one unit when discarding battery module 1 so as to lower the voltage for the purpose of handling, thereby facilitating the discarding of battery module 1.

Further, in battery module 1, battery cells 100 can be restrained by restraint members 500 through the configurations of units 10.

Further, in battery module 1, the plurality of units 10 can be connected together by bus bars 300 to thereby manufacture battery module 1 with each of units 10 being handled as one unit.

Further, in battery module 1, since one voltage detection wire 610 is disposed on one unit 10, cost of battery module 1 can be low as compared with a case where voltage detection wire 610 is disposed on each of battery cells 100.

## Claims

1. A battery module (1) comprising:
a plurality of battery cells (100) arranged side by side in a first direction, each of the plurality of battery cells (100) having a prismatic shape;
a restraint mechanism (400, 500) that restrains the plurality of battery cells (100) in the first direction; and
a restraint force adjustment mechanism (900, 1000) capable of adjusting a restraint load in the first direction, the restraint load being applied by the restraint mechanism (400, 500), wherein
the restraint force adjustment mechanism (900, 1000) includes an operation portion (920, 1010) to be operated when adjusting the restraint load (400, 500),
the operation portion (920, 1010) is provided on the battery module (1),
the restraint mechanism (400, 500) includes two end plates (400) provided at both end portions of a stack of the plurality of battery cells (100) in the first direction, and a binding bar (500) that connects the two end plates (400) to each other,
i) the restraint force adjustment mechanism (900) includes:
at least one bolt member (910) attached to one of the two end plates (400) along the first direction, and
a nut member (920) screwed on the bolt member (910), and
one of the two end plates (400) is able to be deflected toward the stack by fastening the nut member (920) onto the bolt member (910), and an amount of deflection of one of the two end plates (400) is able to be adjusted by adjusting an amount of fastening of the nut member (920),
or
ii) the restraint force adjustment mechanism (1000) includes a bolt member (1010) extending through the binding bar (500) along a second direction orthogonal to the first direction and fastened to another component of the battery module (1), and
by adjusting a fastening force of the bolt member (1010), an amount of deflection of the binding bar (500) along the second direction is able to be adjusted to adjust a length of the battery module (1) along the first direction.

2. The battery module according to claim 1, wherein the restraint force adjustment mechanism (900) further includes a shim member (930) provided between the end plate (400) and the stack.

3. The battery module according to claim 1 or 2, wherein the bolt member (910) also serves as a fixation member that fixes the battery module (1) to a base.

4. The battery module according to claim 3, wherein the restraint force adjustment mechanism (900) further includes a shim member provided between the end plate (400) and an attachment member on the base side.

5. The battery module according to any one of claims 1 to 4, wherein when viewed in the first direction, the bolt member (910) is provided in a region of a range of application of a positive electrode active material layer included in an electrode assembly (140) in each of the plurality of battery cells (100).

6. The battery module according to any one of claims 1 to 5, further comprising a case (200) that accommodates the plurality of battery cells (100) and supports the plurality of battery cells (100) at least in the first direction so as to form a unit (10) including the plurality of battery cells (100), wherein
the restraint mechanism (400, 500) restrains a plurality of the units (10) in the first direction.

## Patentansprüche

1. Batteriemodul (1), aufweisend:
eine Mehrzahl von Batteriezellen (100), welche Seite an Seite in einer ersten Richtung angeordnet sind, wobei jede von der Mehrzahl von Batteriezellen (100) eine prismatische Gestalt aufweist;
einen Rückhaltemechanismus (400, 500), welcher die Mehrzahl von Batteriezellen (100) in der ersten Richtung zurückhält; und
einen Rückhaltekraft-Anpassungsmechanismus (900, 1000), welcher in der Lage ist, eine Rückhaltelast in der ersten Richtung anzupassen, wobei die Rückhaltelast durch den Rückhaltemechanismus (400, 500) aufgebracht wird, wobei
der Rückhaltekraft-Anpassungsmechanismus (900, 1000) einen Betätigungsabschnitt (920, 1010) beinhaltet, welcher zu betätigen ist, wenn die Rückhaltelast (400, 500) angepasst wird,
der Betätigungsabschnitt (920, 1010) auf dem Batteriemodul (1) bereitgestellt ist,
der Rückhaltemechanismus (400, 500) zwei Endplatten (400) beinhaltet, welche an beiden Endabschnitten eines Stapels von der Mehrzahl von Batteriezellen (100) in der ersten Richtung bereitgestellt sind, und einen Verbindungsstab, welcher die beiden Endplatten (400) miteinander verbindet,
i) wobei der Rückhaltekraft-Anpassungsmechanismus (900) beinhaltet:
zumindest ein Schraubenelement (910), welches an einer der beiden Endplatten (400) entlang der ersten Richtung angebracht ist, und
ein Mutterelement (920), welches auf das Schraubenelement (910) geschraubt ist, und
eine von den beiden Endplatten (400) durch Anziehen des Mutterelements (920) auf dem Schraubenelement (910) in Richtung hin zu dem Stapel verlagert werden kann, und ein Verlagerungsbetrag von einer der beiden Endplatten (400) durch Anpassen eines Anzugsbetrages des Mutterelements (920) angepasst werden kann, oder
ii) der Rückhaltekraft-Anpassungsmechanismus (1000) ein Schraubenelement (1010) beinhaltet, welches sich durch den Verbindungsstab (500) entlang einer zweiten Richtung orthogonal zu der ersten Richtung erstreckt und an einer weiteren Komponente des Batteriemoduls (1) befestigt ist, und
durch Anpassen einer Anzugskraft des Schraubenelements (1010) ein Verlagerungsbetrag des Verbindungsstabs (500) entlang der zweiten Richtung angepasst werden kann, um eine Länge des Batteriemoduls (1) entlang der ersten Richtung anzupassen.

2. Batteriemodul nach Anspruch 1, wobei der Rückhaltekraft-Anpassungsmechanismus (900) ferner ein Beilagscheibenelement (930) beinhaltet, welches zwischen der Endplatte (400) und dem Stapel bereitgestellt ist.

3. Batteriemodul nach Anspruch 1 oder 2, wobei das Schraubenelement (910) zudem als ein Befestigungselement dient, welches das Batteriemodul (1) an einer Basis befestigt.

4. Batteriemodul nach Anspruch 3, wobei der Rückhaltekraft-Anpassungsmechanismus (900) ferner ein Beilagscheibenelement beinhaltet, welches zwischen der Endplatte (400) und einem Anbringungselement auf der Basisseite bereitgestellt ist.

5. Batteriemodul nach einem der Ansprüche 1 bis 4, wobei, aus der ersten Richtung betrachtet, das Schraubenelement (910) in einem Bereich eines Aufbringungsgebiets von einer Aktivmaterialschicht einer positiven Elektrode bereitgestellt ist, welche in einer Elektrodenanordnung (410) in jeder von der Mehrzahl von Batteriezellen (100) beinhaltet ist.

6. Batteriemodul nach einem der Ansprüche 1 bis 5, ferner aufweisend ein Gehäuse (200), welches die Mehrzahl von Batteriezellen (100) aufnimmt und die Mehrzahl von Batteriezellen (100) zumindest in der ersten Richtung trägt, so dass eine die Mehrzahl von Batteriezellen (100) beinhaltende Einheit (10) gebildet wird, wobei
der Rückhaltemechanismus (400, 500) eine Mehrzahl der Einheiten (10) in der ersten Richtung zurückhält.

## Revendications

1. Module de batterie (1) comprenant :
une pluralité de cellules de batterie (100) disposés côte à côte dans une première direction, chacun de la pluralité de cellules de batterie (100) ayant une forme prismatique ;
un mécanisme de retenue (400, 500) qui retient la pluralité de cellules de batterie (100) dans la première direction ; et
un mécanisme d'ajustement de la force de retenue (900, 1000) capable d'ajuster une charge de retenue dans la première direction, la charge de retenue étant appliquée par le mécanisme de retenue (400, 500), dans lequel
le mécanisme d'ajustement de la force de retenue (900, 1000) comprend une partie opérationnelle (920, 1010) à actionner lors de l'ajustement de la charge de retenue (400, 500),
la partie opérationnelle (920, 1010) est fournie sur le module de batterie (1),
le mécanisme de retenue (400, 500) comprend deux plaques d'extrémité (400) prévues aux deux extrémités d'une pile de la pluralité de cellules de batterie (100) dans la première direction, et une barre de fixation (500) qui relie les deux plaques d'extrémité (400) l'une à l'autre,
i) le mécanisme d'ajustement de la force de retenue (900) comprend :
au moins un élément de boulon (910) fixé à l'une des deux plaques d'extrémité (400) le long de la première direction, et
un élément d'écrou (920) vissé sur l'élément de boulon (910), et
l'une des deux plaques d'extrémité (400) peut être déviée vers la pile en fixant l'élément d'écrou (920) sur l'élément de boulon (910), et une quantité de déviation de l'une des deux plaques d'extrémité (400) peut être ajustée en ajustant une quantité de fixation de l'élément d'écrou (920),
ou
ii) le mécanisme d'ajustement de la force de retenue (1000) comprend un élément de boulon (1010) s'étendant à travers la barre de fixation (500) le long d'une deuxième direction orthogonale à la première direction et fixé à un autre composant du module de batterie (1), et
en ajustant la force de fixation de l'élément de boulon (1010), il est possible d'ajuster la déflexion de la barre de fixation (500) le long de la deuxième direction afin d'ajuster la longueur du module de batterie (1) le long de la première direction.

2. Le module de batterie selon la revendication 1, dans lequel le mécanisme d'ajustement de la force de retenue (900) comprend en outre un élément de calage (930) placé entre la plaque d'extrémité (400) et la pile.

3. Le module de batterie selon la revendication 1 ou 2, dans lequel l'élément de boulon (910) sert également d'élément de fixation qui fixe le module de batterie (1) à une base.

4. Le module de batterie selon la revendication 3, dans lequel le mécanisme d'ajustement de la force de retenue (900) comprend en outre un élément de calage placé entre la plaque d'extrémité (400) et un élément de fixation sur le côté de la base.

5. Le module de batterie selon l'une des revendications 1 à 4, dans lequel, vu dans la première direction, l'élément de boulon (910) est prévu dans une zone d'application d'une couche de matériau actif d'électrode positive incluse dans un assemblage d'électrodes (140) dans chacune de la pluralité de cellules de batterie (100).

6. Le module de batterie selon l'une des revendications 1 à 5, comprenant en outre un boîtier (200) qui accueille la pluralité de cellules de batterie (100) et supporte la pluralité de cellules de batterie (100) au moins dans la première direction de manière à former une unité (10) comprenant la pluralité de cellules de batterie (100), dans lequel
le mécanisme de retenue (400, 500) retient une pluralité d'unités (10) dans la première direction.
